# EUROPÄISCHE PATENTANMELDUNG

(11) **EP 2 093 399 A1**
(43) Veröffentlichungstag der Anmeldung: **26.08.2009**
(21) Anmeldenummer: 08003395.4
(22) Anmeldetag: 25.02.2008
(51) Int. Cl.: F02C 7/141, F01D 25/30

(54) **Gasturbine mit Abgaskühlung**

(71) Anmelder: SIEMENS AKTIENGESELLSCHAFT, 80333 München (DE)
(72) Erfinder: Bröker, Marc, 46539 Dinslaken (DE); Bullinger, Patrick, 67269 Grünstadt (DE); Harders, Harald, Dr., 45468 Mülheim a.d. Ruhr (DE); Hülfenhaus, Armin, 40764 Langenfeld (DE); Janssen, Stefan, Dr., 45147 Essen (DE); Lüsebrink, Oliver, Dr., 58456 Witten (DE); Sandhaas, Steven, 40223 Düsseldorf (DE); Schmalhorst, Jörg, 45127 Essen (DE)

(57) **Zusammenfassung**

Eine Gasturbine (1) mit einer Anzahl von jeweils zu Laufschaufelreihen zusammengefassten, an einer Turbinenwelle (8) angeordneten Laufschaufeln (12) und mit einer Anzahl von jeweils zu Leitschaufelreihen (14) zusammengefassten, mittels Leitschaufelträgern an einem Turbinengehäuse (16) befestigten Leitschaufeln (14), die von einem Arbeitsmedium umströmt werden, soll auch bei einer Zusammenschaltung mit den üblicherweise vorgesehenen nachgeschalteten Komponenten für einen besonders hohen Wirkungsgrad geeignet sein. Dazu ist den Turbinenschaufeln (12, 14) strömungsmediumsseitig eine Kühleinrichtung (18) für das abströmende Arbeitsmedium nachgeschaltet.

## Beschreibung

Die Erfindung bezieht sich auf eine Gasturbine mit einer Anzahl von jeweils zu Laufschaufelreihen zusammengefassten, an einer Turbinenwelle angeordneten Laufschaufeln und mit einer Anzahl von jeweils zu Leitschaufelreihen zusammengefassten, mittels Leitschaufelträgern an einem Turbinengehäuse befestigten Leitschaufeln, die von einem Arbeitsmedium umströmt werden.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Anzahl von Brennern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine dem jeweiligen Brenner nachgeschaltete Turbineneinheit geführt, wo es sich arbeitsleistend entspannt.

Die Turbineneinheit einer Gasturbine weist zur Impulsübertragung des Arbeitsmediums auf die Turbinenwelle eine Anzahl von mit der Turbinenwelle verbundenen, rotierbaren Laufschaufeln auf. Die Laufschaufeln sind dazu kranzförmig an der Turbinenwelle angeordnet und bilden somit eine Anzahl von Laufschaufelkränzen oder Laufschaufelreihen. Die Turbine und der Verdichter sind auf einer gemeinsamen, auch als Turbinenläufer bezeichneten Turbinenwelle angeordnet, mit der auch der Generator bzw. die Arbeitsmaschine verbunden ist, und die um ihre Mittelachse drehbar gelagert ist.

Weiterhin umfasst die Turbineneinheit üblicherweise eine Anzahl von feststehenden Leitschaufeln, die ebenfalls kranzförmig unter der Bildung von Leitschaufelkränzen oder Leitschaufelreihen an einem Innengehäuse bzw. dem Stator der Turbine befestigt sind. Die Laufschaufeln dienen dabei zum Antrieb der Turbinenwelle durch Impulsübertrag vom die Turbine durchströmenden Arbeitsmedium. Die Leitschaufeln dienen hingegen zur Strömungsführung des Arbeitsmediums zwischen jeweils zwei in Strömungsrichtung des Arbeitsmediums gesehen aufeinander folgenden Laufschaufelreihen oder Laufschaufelkränzen. Ein aufeinander folgendes Paar aus einem Kranz von Leitschaufeln oder einer Leitschaufelreihe und aus einem Kranz von Laufschaufeln oder einer Laufschaufelreihe wird dabei auch als Turbinenstufe bezeichnet.

Eine Leitschaufel weist in der Regel eine auch als Schaufelfuß bezeichnete Plattform auf, die zur Fixierung der jeweiligen Leitschaufel am Innengehäuse der Turbine als Wandelement angeordnet ist und die die äußere Begrenzung eines Heißgaskanals für das die Turbine durchströmende Arbeitsmedium bildet. Für eine effiziente Strömungsführung des Arbeitsmediums in Richtung auf die sich einer Leitschaufelreihe anschließenden Laufschaufelreihe weist eine der Leitschaufelreihe zugeordnete Leitschaufel üblicherweise ein gewölbtes, flügelförmiges Querschnittsprofil auf, so dass bei möglichst gering gehaltenen Reibungsverlusten an der jeweiligen Leitschaufel sich die vorgesehene Strömungsführung einstellt und somit die Leitschaufelreihe bzw. die ihr zugeordnete Turbinenstufe einen möglichst hohen Wirkungsgrad besitzt. Dazu weist die Vorderkante einer Leitschaufel einen runden Querschnitt auf, der sich zur spitz zulaufenden Hinterkante der Leitschaufel verjüngt. Eine Laufschaufel ist ähnlich geformt, wobei in der Regel spezifische Details wie etwa die maximale Profildicke, der Krümmungsradius an der Vorderkante usw. an den Einsatzzweck angepasst, d. h. für eine besonders effiziente Impulsübertragung vom Arbeitsmedium auf die jeweilige Laufschaufel optimiert sind.

Bei der Auslegung oben beschriebener Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Temperatur erreichen, mit dem das Arbeitsmedium von der Brennkammer ab- und in die Turbineneinheit einströmt. Daher werden Temperaturen von etwa 1200 °C bis 1500 °C für derartige Gasturbinen angestrebt und auch erreicht.

Die hohe Temperatur des Arbeitsmediums bedingt jedoch eine entsprechend hohe Temperatur des Abgases aus der Gasturbine. Da die der Gasturbine nachgeschalteten Bauteile wie beispielsweise die Turbinenabgasstrecke oder ein evtl. Abhitzekessel nicht für derartig hohe Temperaturen ausgelegt sind wie die Bauteile der Gasturbine selbst, begrenzt die thermische Belastbarkeit der der Gasturbine nachgeschalteten Bauteile die Temperatur des Abgases und des Arbeitsmediums in der Gasturbine, so dass der Steigerung des Wirkungsgrades Grenzen gesetzt sind.

Der Erfindung liegt daher die Aufgabe zugrunde, eine Gasturbine der oben genannten Art anzugeben, die auch bei einer Zusammenschaltung mit den üblicherweise vorgesehenen nachgeschalteten Komponenten für einen besonders hohen Wirkungsgrad geeignet ist.

Diese Aufgabe wird erfindungsgemäß gelöst, indem den Turbinenschaufeln strömungsmediumsseitig eine Kühleinrichtung für das abströmende Arbeitsmedium nachgeschaltet ist.

Die Erfindung geht dabei von der Überlegung aus, dass ein besonders hoher Wirkungsgrad der Gasturbine durch eine vergleichsweise hohe Betriebstemperatur erreichbar ist. Um eine besonders hohe Betriebstemperatur der Gasturbine zu erreichen, ohne die der Gasturbine nachgeschalteten Bauteile thermisch zu überlasten, sollte eine Beaufschlagung dieser nachgeschalteten Bauteile mit zu heißem Arbeitsmedium verhindert werden. Dazu kann die Temperatur des Arbeitsmediums nach dem Austritt aus der Gasturbine gesenkt werden. Eine Kühlung des Arbeitsmediums nach dem Austritt aus der Gasturbine hat nämlich keinen Einfluss auf den Wirkungsgrad der Gasturbine selbst. Dies kann erreicht werden, indem den Turbinenschaufeln eine Kühleinrichtung für das abströmende Arbeitsmedium nachgeschaltet ist.

In vorteilhafter Ausgestaltung ist die Kühleinrichtung an den Turbinenschaufelbereich angrenzend angeordnet. Auf diese Weise wird der mit dem noch heißen Arbeitsmedium aus der Gasturbine beaufschlagte Bereich minimiert, und die gesamte Abgasstrecke wird mit dem durch die Kühleinrichtung gekühlten Arbeitsmedium beaufschlagt. Dies bedeutet, dass ein entsprechend großer Teil der Abgasstrecke aus Werkstoffen mit entsprechend niedrigeren zulässigen Einsatztemperaturen gefertigt werden kann.

Um eine möglichst gleichmäßige Kühlung des aus der Gasturbine strömenden Arbeitsmediums zu gewährleisten, umfasst die Kühleinrichtung vorteilhafterweise ein im Innenraum der Gasturbine angeordnetes Rohrsystem. Dadurch entfaltet sich die Kühlwirkung der Kühleinrichtung auf einem größeren Strömungsquerschnitt des Arbeitsmediums und die Kühlung erfolgt insgesamt gleichmäßiger als bei einer Anordnung des Kühlsystems beispielsweise an der Innenwand des Auslassbereiches der Gasturbine. Dadurch wird eine noch bessere Kühlung des abströmenden Arbeitsmediums erreicht, wodurch eine noch höhere Betriebstemperatur der Gasturbine und ein entsprechend höherer Wirkungsgrad erzielbar ist.

Um eine besonders einfache Kühlung des abströmenden Arbeitsmediums zu erreichen, umfasst die Kühleinrichtung in vorteilhafter Ausgestaltung eine Anzahl von Einspritzventilen zur Einbringung eines Kühlmediums in den Innenraum der Gasturbine. Durch eine Einspritzkühlung kann die Temperatur des abströmenden Arbeitsmediums besonders einfach beeinflusst werden und ist in vergleichsweise größeren Bereichen regelbar.

Vorteilhafterweise umfasst die Kühleinrichtung weiterhin eine Steuereinrichtung zur Steuerung der Kühlmediumstemperatur und/oder der Kühlmediumsmenge. Durch die Steuerung der Kühlmediumstemperatur und/oder der Kühlmediumsmenge ist die Regelung der Temperatur des abströmenden Arbeitsmediums noch einfacher erreichbar. Beispielsweise kann eine Maximaltemperatur des abströmenden Arbeitsmediums vorgegeben werden, die durch entsprechende Auslegung der Steuereinrichtung nicht überschritten wird.

Für einen besonders einfachen Betrieb der Kühleinrichtung ist vorzugsweise Wasser als Kühlmedium vorgesehen. Durch seine thermischen Eigenschaften und seine Reaktionsträgheit ist Wasser als Kühlmedium besonders geeignet.

Die mit der Erfindung erzielten Vorteile bestehen insbesondere darin, dass durch die Nachschaltung einer Kühleinrichtung für das abströmende Arbeitsmedium eine besonders hohe Betriebstemperatur und damit ein besonders hoher Wirkungsgrad der Gasturbine möglich ist, ohne die der Gasturbine nachgeschalteten Bauteile thermisch zu stark zu belasten. Dadurch entfallen auch bei steigenden Abgastemperaturen der Gasturbine zusätzliche werkstofftechnische und/oder konstruktive Maßnahmen, die entsprechend sehr hohe Kosten nach sich ziehen würden. Durch die gezielte Senkung der Abgastemperatur auf eine gewünschte Temperatur durch die Zuführung eines Kühlmediums werden die eingesetzten Materialien der Abgasstrecke und eines evtl. nachgeschalteten Abhitzekessels vor Versagen durch thermische Überlastung geschützt. Dies ermöglicht zudem flexiblere Fahrweisen der Gasturbine, z. B. in Teillast sowie den Einsatz bei hohen Umgebungstemperaturen.

Ein Ausführungsbeispiel der Erfindung wird anhand einer Zeichnung näher erläutert. Darin zeigen:
- FIG 1: einen Längsschnitt durch eine Gasturbine mit einer Einspritzdüse für Kühlmedium in der Turbinenwand, und
- FIG 2: einen Längsschnitt durch eine Gasturbine mit einem im Inneren angeordneten Rohrsystem der Kühleinrichtung.

Gleiche Teile sind in allen Figuren mit denselben Bezugszeichen versehen.

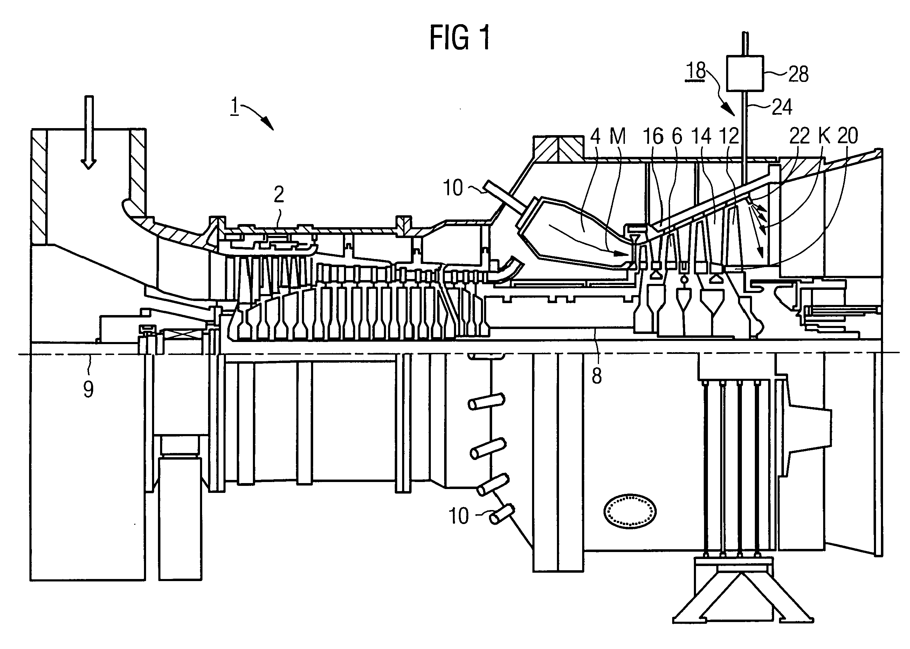

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die in der Art einer Ringbrennkammer ausgeführte Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1500 °C ausgelegt. Um dabei auch eine hohe Lebensdauer oder Betriebsdauer der Gasturbine 1 zu gewährleisten, sind deren wesentliche Komponenten, insbesondere die Turbinenschaufeln 15 (d. h. die Leitschaufeln 14 und/oder die Laufschaufeln 12), kühlbar ausgebildet.

Um bei derartig hohen Temperaturen auch die der Gasturbine 1 nachgeschalteten Bauteile vor einer Beaufschlagung mit zu heißem Arbeitsmedium wirksam zu schützen, ist den Turbinenschaufeln 12, 14 strömungsmediumsseitig eine Kühleinrichtung 18 für das abströmende Arbeitsmedium nachgeschaltet. Das Kühlmedium - vorzugsweise Wasser - wird über ein Einspritzventil direkt in den Abströmbereich der Gasturbine 1 eingebracht, also stromab der Laufschaufeln der letzten Turbinenstufe. Für eine besonders effektive Kühlung des gesamten aus der Gasturbine 1 abströmenden Arbeitsmediums ist das Einspritzventil direkt an den Turbinenschaufelbereich angrenzend angeordnet. Das Einspritzventil 22 ist aus einer Zuleitung 24 gespeist. Die Kühlmediumsmenge und die Kühlmediumstemperatur werden dabei von einer Steuereinrichtung 28 gesteuert. Dadurch ist eine zuverlässige Regelung der Temperatur des abströmenden Strömungsmediums gewährleistet und Beschädigungen der nachgeschalteten, nicht näher gezeigten Bauteile durch eine Beaufschlagung mit zu heißem Arbeitsmedium werden zuverlässig verhindert.

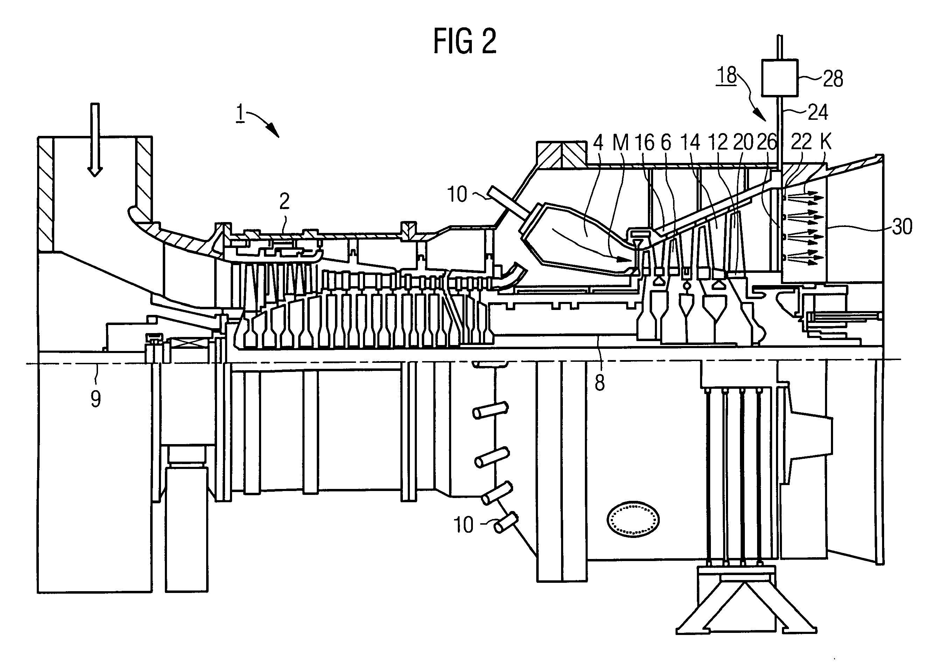

FIG 2 zeigt eine alternative Ausführungsform der Erfindung. Wiederum ist die Kühleinrichtung 18 unmittelbar angrenzend an den Turbinenschaufelbereich angeordnet. Sie umfasst jedoch in FIG 2 ein im Innenraum der Gasturbine 1 angeordnetes Rohrsystem 26. Durch dieses Rohrsystem kann das Kühlmedium auf mehrere Einspritzventile 22 im Innenraum der Gasturbine verteilt werden und es wird so eine noch gleichmäßigere Kühlung des abströmenden Arbeitsmediums erreicht. Das Rohrsystem kann dabei auch in den strahlenförmig angeordneten Lagerstreben 30 angeordnet sein.

Durch die so erreichte gezielte Verringerung der Temperatur des abströmenden Arbeitsmediums wird eine zu hohe thermische Belastung der der Gasturbine nachgeschalteten Bauteile konsequent verhindert. Dadurch ist die Gasturbine ohne umfangreichen Konstruktionsaufwand für eine höhere Temperatur geeignet und es lässt sich ein höherer Wirkungsgrad erzielen.

## Patentansprüche

1. Gasturbine (1) mit einer Anzahl von jeweils zu Laufschaufelreihen zusammengefassten, an einer Turbinenwelle (8) angeordneten Laufschaufeln (12) und mit einer Anzahl von jeweils zu Leitschaufelreihen zusammengefassten, mittels Leitschaufelträgern an einem Turbinengehäuse (16) befestigten Leitschaufeln (14), die von einem Arbeitsmedium umströmt werden,
wobei den Turbinenschaufeln (12, 14) strömungsmediumsseitig eine Kühleinrichtung (18) für das abströmende Arbeitsmedium nachgeschaltet ist.

2. Gasturbine (1) nach Anspruch 1,
bei dem die Kühleinrichtung (18) an den Turbinenschaufelbereich angrenzend angeordnet ist.

3. Gasturbine (1) nach Anspruch 1 oder 2,
bei der die Kühleinrichtung (18) ein im Innenraum der Gasturbine (1) angeordnetes Rohrsystem (26) umfasst.

4. Gasturbine (1) nach einem der Ansprüche 1 bis 3,
bei der die Kühleinrichtung (18) eine Anzahl von Einspritzventilen (22) zur Einbringung eines Kühlmediums in den Innenraum der Gasturbine (1) umfasst.

5. Gasturbine (1) nach einem der Anspruch 4,
bei der die Kühleinrichtung (18) eine Steuereinrichtung (28) zur Steuerung der Kühlmediumstemperatur und/oder der Kühlmediumsmenge umfasst.

6. Gasturbine (1) nach einem der Ansprüche 4 oder 5,
bei der Wasser als Kühlmedium vorgesehen ist.
